# EUROPEAN PATENT APPLICATION

(11) **EP 4 475 528 A1**
(43) Date of publication of application: **11.12.2024**
(21) Application number: 24177871.1
(22) Date of filing: 24.05.2024
(51) Int. Cl.: H04N 19/56, H04N 19/53, G06N 3/02, G06T 7/20, G06T 9/00, H04N 19/54, H04N 19/57, H04N 19/59

(54) **IMAGE PROCESSING APPARATUS AND MOTION ESTIMATION METHOD THEREOF**

(30) Priority: 07.06.2023 KR 20230072735
(71) Applicant: Samsung Electronics Co., Ltd., Suwon-si, Gyeonggi-do 16677 (KR)
(72) Inventor: JEE, Seunghoon, 16677 Suwon-si (KR); SUNG, Young Hun, 16677 Suwon-si (KR); OH, Dokwan, 16677 Suwon-si (KR); OH, Paul, 16677 Suwon-si (KR); LEE, Junhee, 16677 Suwon-si (KR); JANG, Dongwon, 16677 Suwon-si (KR); HWANG, Chansol, 16677 Suwon-si (KR)
(74) Representative: Arnold & Siedsma

(57) **Abstract**

An image processing apparatus for performing motion estimation is provided. The image processing apparatus comprises a position estimation module configured to estimate an initial search position by providing a first frame and a second frame of a video as input to a neural network that is trained to output the initial search position; and a motion estimation module configured to perform motion estimation based on the initial search position.

## Description

### TECHNICAL FIELD

The disclosure relates to a neural network-based image processing apparatus and method of optimizing motion estimation of the image processing apparatus.

### BACKGROUND

With the development of information and communication technology, videos may be captured, stored, and shared in active and diverse ways. For example, videos may be captured and stored using mobile devices and portable devices, and image signal processing (ISP) may be used to process the captured videos to address physical deterioration, or codec technology may be used for efficient storage and transmission of the videos. In the ISP or codec technology, video processing may be performed by estimating a correlation between frames in a sequence, for example an image stream, to improve video quality, or the correlation may be compressed so that a video with a low volume may be stored and transmitted. The correlation between the frames may be determined based on motion estimation (ME) between images in units, e.g., a patch or block, of a video to be processed. However, if a maximum search range is set within a system-on-chip (SoC), such as a mobile device, or if a search range is set for software optimization, motion beyond a certain level, which may increase as video resolution increases, may not be found.

### SUMMARY

Provided is a neural network-based image processing apparatus and method of optimizing motion estimation of the image processing apparatus.

Additional aspects will be set forth in part in the description which follows and, in part, will be apparent from the description, or may be learned by practice of the presented embodiments.

In accordance with an aspect of the disclosure, an image processing apparatus comprises a position estimation module configured to estimate an initial search position by providing a first frame and a second frame of a video as input to a neural network that is trained to output the initial search position; and a motion estimation module configured to perform motion estimation based on the initial search position.

The neural network may be trained to output the initial search position as an affine matrix value.

The neural network may further include a convolutional neural network (CNN).

The first frame and the second frame may have an original size, and the image processing apparatus may further include a first size conversion module configured to convert the first frame into a converted first frame having an input size associated with the neural network, and to convert the second frame into a converted second frame having the input size.

The motion estimation module may be further configured to perform the motion estimation by moving a search range toward the initial search position.

The image processing apparatus may further include a second size converter configured to convert a value of the initial search position into a converted value having a target image size associated with the motion estimation module.

The image processing apparatus may further include a training module which is differentiable and which may be configured to train the neural network using a back-propagation method.

The training module may be further configured to train the neural network using unsupervised learning.

The training module may be further configured to train the neural network so that a loss function between a first training frame and a predicted image is minimized, wherein the predicted image is predicted from a second training frame using the neural network.

The training module may further include: an affine transformation module configured to receive the first training frame and the second training frame as input, and to perform affine transformation on the second training frame based on the affine matrix value; a motion kernel estimation module configured to perform the motion estimation on the affine-transformed second training frame, and to output a motion kernel; and a motion compensation module configured to perform motion compensation based on a result of the motion estimation and to output the predicted image.

The motion kernel estimation module may be further configured to: perform unfolding for each block of the affine-transformed second training frame; divide the each block into a plurality of patches; calculate a Sum of Absolute Differences (SAD) between the plurality of patches of the each block and corresponding blocks of the first training frame; and generate the motion kernel based on the calculated SAD using a softmax function.

The image processing apparatus may further include at least one of a video codec device and an image signal processing (ISP) device.

In accordance with an aspect of the disclosure, a motion estimation method for motion estimation of a video by an image processing apparatus includes estimating an initial search position by providing a first frame and a second frame of the video as input to a neural network that is trained to output the initial search position; and performing the motion estimation based on the initial search position.

The neural network may be trained to output the initial search position as an affine matrix value.

The first frame and the second frame may have an original size, and the method may further include converting the first frame into a converted first frame having an input size associated with the neural network, and converting the second frame into a converted second frame having the input size.

The performing of the motion estimation may further include moving a search range toward the initial search position.

The method may further include converting a value of the initial search position into a converted value having a target image size associated with the motion estimation.

The method may further include training the neural network using a training module, which is differentiable, and a back-propagation method.

The training of the neural network may be performed using unsupervised learning.

In accordance with an aspect of the disclosure, an apparatus for optimizing motion estimation of a video in a video codec device or an image signal processing (ISP) device includes one or more processors configured to: read a current frame and a reference frame of the video from a memory before the motion estimation of the video is performed by the video codec device or the ISP device, obtain an initial search position for the motion estimation using a neural network, and provide the initial search position to the video codec device or the ISP device, wherein the neural network is trained to receive the current frame and the reference frame as input and to output an affine matrix value which represents the initial search position.

### BRIEF DESCRIPTION OF THE FIGURES

FIG. 1A is a block diagram illustrating an image processing apparatus according to an embodiment;
FIG. 1B is a diagram illustrating an example of a position estimator based on a neural network, according to an embodiment.
FIG. 2 is a block diagram illustrating an image processing apparatus according to another embodiment;
FIG. 3 is a block diagram illustrating an image processing apparatus according to yet another embodiment;
FIGS. 4A, 4B, and 4C are diagrams explaining an example of a trainer in FIG. 4, according to an embodiment;
FIG. 5 is a block diagram illustrating an apparatus for optimizing motion estimation of a video according to an embodiment;
FIGS. 6A and 6B are diagrams explaining an example of usage in standard codec, according to an embodiment;
FIG. 7 is a flowchart illustrating a motion estimation method according to an embodiment;
FIG. 8 is a flowchart illustrating a method of training a neural network according to an embodiment;
FIG. 9 is a flowchart illustrating an example of motion kernel estimation of FIG. 8, according to an embodiment;

### DETAILED DESCRIPTION

Details of some embodiments are included in the following detailed description and drawings. Advantages and features of the present disclosure, and a method of achieving the same, will be more clearly understood from the following embodiments described in detail with reference to the accompanying drawings. Throughout the drawings and the detailed description, unless otherwise described, the same drawing reference numerals will be understood to refer to the same elements, features, and structures.

It will be understood that, although the terms first, second, etc. may be used herein to describe various elements, these elements should not be limited by these terms. These terms are only used to distinguish one element from another. Any references to singular may include plural unless expressly stated otherwise. In addition, unless explicitly described to the contrary, an expression such as "comprising" or "including" will be understood to imply the inclusion of stated elements but not the exclusion of any other elements. Also, the terms, such as "unit" or "module," etc., should be understood as a unit that performs at least one function or operation and that may be embodied as hardware, software, or a combination thereof.

As is traditional in the field, the embodiments are described, and illustrated in the drawings, in terms of functional blocks, units and/or modules. Those skilled in the art will appreciate that these blocks, units and/or modules are physically implemented by electronic (or optical) circuits such as logic circuits, discrete components, microprocessors, hard-wired circuits, memory elements, wiring connections, and the like, which may be formed using semiconductor-based fabrication techniques or other manufacturing technologies. In the case of the blocks, units and/or modules being implemented by microprocessors or similar, they may be programmed using software (e.g., microcode) to perform various functions discussed herein and may optionally be driven by firmware and/or software. Alternatively, each block, unit and/or module may be implemented by dedicated hardware, or as a combination of dedicated hardware to perform some functions and a processor (e.g., one or more programmed microprocessors and associated circuitry) to perform other functions. Also, each block, unit and/or module of the embodiments may be physically separated into two or more interacting and discrete blocks, units and/or modules without departing from the present scope. Further, the blocks, units and/or modules of the embodiments may be physically combined into more complex blocks, units and/or modules without departing from the present scope.

Throughout the rest of the text, the terms "estimator" and "estimation module" will be used interchangeably, wherein said estimators are to be understood as modules for performing an estimation in the sense of the previous paragraph. The same holds for the terms "trainer" and "training module" which are used interchangeably.

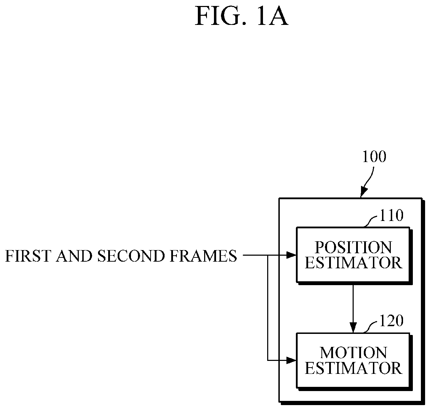

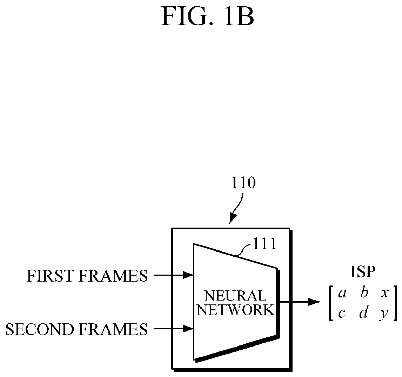

FIG. 1A is a block diagram illustrating an image processing apparatus according to an embodiment of the present disclosure. FIG. 1B is a diagram illustrating an example of a position estimator 110 based on a neural network according to an embodiment of the present disclosure.

Referring to FIG. 1A, an image processing apparatus 100 may include the position estimator 110 and a motion estimator 120. In embodiments, the position estimator 110 may be referred to as a position estimation module, and the motion estimator 120 may be referred to as a motion estimation module.

The image processing apparatus 100 may be one or more of a video codec device for performing video encoding or a video stabilizer, or an image signal processing (SIP) apparatus for addressing physical deterioration including noise reduction (NR), High Dynamic Range (HDR), de-blur, Framerate up-conversion (FRUC), and the like. Preferably, the position estimator 110 and the motion estimator 120 may be implemented as separate hardware or software modules, or the position estimator 110 may be integrated into the motion estimator 120 to be implemented as one module. In addition, the motion estimator 120 of the image processing apparatus 100 may be included as a component in the codec device or the ISP device, and the position estimator 110 may be implemented separately from the video codec device or the ISP device to function as a preprocessor before the devices.

The position estimator 110 may receive a video captured by at least one of a camera and an Inertial Measurement Unit, and may estimate an initial search position for optimizing motion estimation of the video, and may provide information about the estimated initial search position to the motion estimator 120.

Referring to FIG. 1B, the position estimator 110 may be based on or otherwise relate to or include a neural network 111. The neural network 111 may output the information about the initial search position by using a first frame and a second frame as input. For example, at a particular time t, the first frame may be a current frame corresponding to the time t, and the second frame may be a reference frame corresponding to a time t-1. The neural network 111 may be pre-trained to output an affine matrix value ISP that represents the initial search position. The neural network 111 may be, for example, convolutional neural network (CNN), but embodiments are not limited thereto. The neural network 111 may be trained using a back-propagation method. Further, the neural network 111 may be trained using unsupervised learning.

The motion estimator 120 may perform Motion Estimation (ME) by using the affine matrix value ISP, which represents the initial search position output by the position estimator 110, and the first and second frames. The motion estimator 120 may perform motion estimation in units of blocks between the first and second frames. For example, the motion estimator 120 may perform motion estimation by moving the center of a search range toward the initial search position.

Generally, codec encoding or motion estimation in image signal processing may be performed by using a full search method in which a search range is specified based on a block position in the current frame, and blocks are moved by one pixel at a time in a search range of a reference frame to find an area with a smallest Sum of Absolute Differences (SAD) between pixels in a block, in order to obtain a motion vector. The full search method may use a considerable amount of computation resources, and using a simpler method may reduce the accuracy of motion vector estimation. In addition, if a search range increases for high-resolution image processing, the amount of computation may increase, causing performance degradation. If the motion estimator is configured as hardware, the search range is fixed, thereby limiting the search range. For example, if a maximum search range is set within a system-on-chip (SoC), for example in a device such as a mobile device, or if a search range is set for software optimization, motion beyond a certain level may not be found or detected as the resolution of a video increases, and a new hardware encoder or software architecture may therefore be required.

Preferably, by estimating the initial search position using a neural network trained to output an affine matrix value, the search range may be controlled in real time during motion estimation of a video, thereby increasing the accuracy of motion estimation even with a relatively small amount of computation. Further, in this manner, a compression rate and quality of a video may be improved.

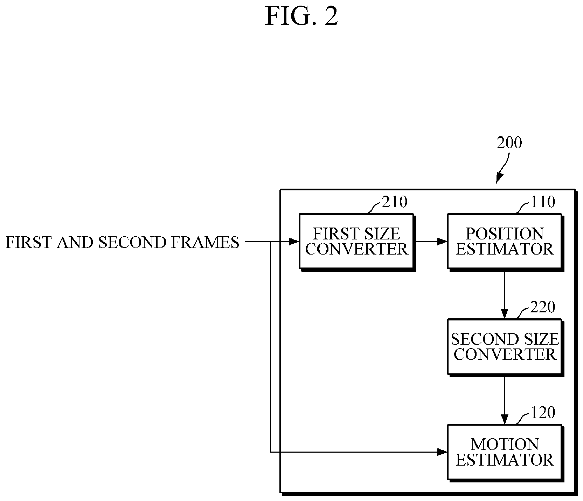

FIG. 2 is a block diagram illustrating an image processing apparatus according to another embodiment of the present disclosure.

Referring to FIG. 2, an image processing apparatus 200 may include the position estimator 110, the motion estimator 120, a first size converter 210, and a second size converter 220. Preferably, the first size converter 210 may be referred to as a first size conversion module, and the second size converter 220 may be referred to as a second size conversion module.

The first size converter 210 may convert a first size of an input original image into a second size corresponding to an input of the position estimator 110. For example, a video captured by a camera may have various resolutions of full high definition (FHD), 4K, 8K, and the like. By contrast, a neural network of the position estimator 110 may be trained to process an image of a predetermined size (e.g., 448×256) with a relatively small amount of computation.

The first size converter 210 may convert the input image having the first size into a converted image having a set or predetermined second size associated with or appropriate for the neural network by scaling up or scaling down the input image having the first size, and may provide the converted image having the second size to the position estimator 110.

The position estimator 110 may output an affine matrix value, which represents the initial search position, by using converted first and second frames having the second size as input.

The second size converter 220 may scale up or scale down the affine matrix value ISP output by the position estimator 110 into scaled value having a target image size associated with or appropriate for the motion estimator 120, and may provide the scaled value to the motion estimator 120.

The motion estimator 120 may perform motion estimation by moving the search range based on the affine matrix value ISP that represents the initial search position. In this manner, it may be possible to effectively respond to input of images having various sizes.

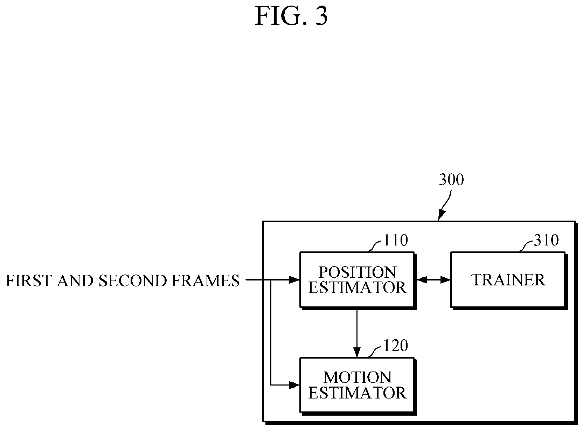

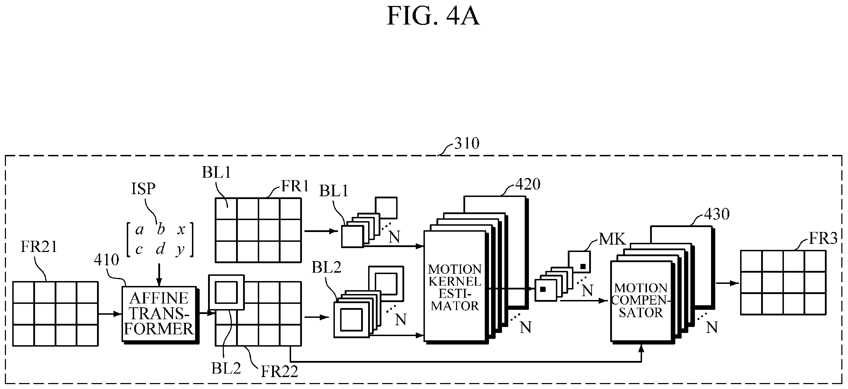

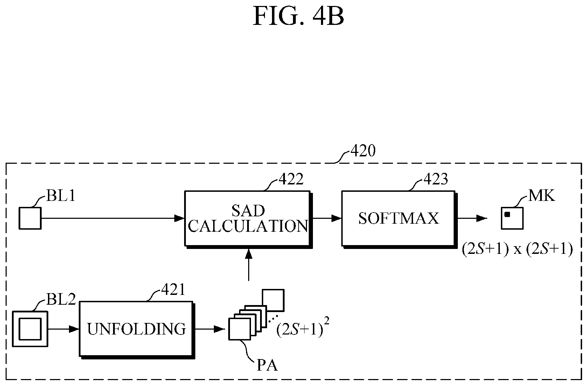

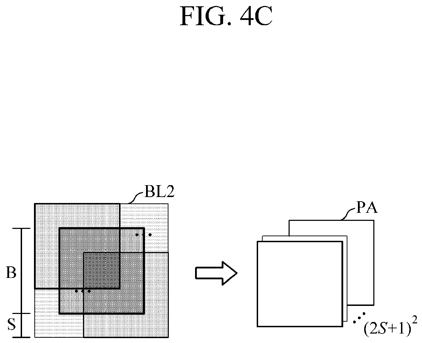

FIG. 3 is a block diagram illustrating an image processing apparatus according to yet another embodiment of the present disclosure. FIGS. 4A, 4B, and 4C are diagrams explaining an example of a trainer in FIG. 4.

Referring to FIG. 3, an image processing apparatus 300 may include the position estimator 110, the motion estimator 120, and a trainer 310. Preferably, the trainer 310 may be referred to as a training module. The position estimator 110 and the motion estimator 120 may be substantially similar to those described above with reference to FIGS. 1A-1B and 2, and therefore redundant or duplicative description may be omitted.

The trainer 310 may be implemented by or using a neural network which mimics the standard codec or ISP. The trainer 310 may include a differentiable module so that backpropagation flows when the neural network 111 is trained.

For example, referring to FIG. 4A, the trainer 310 may include an affine transformer 410, a motion kernel estimator 420, and a motion compensator 430 which are differentiable. Preferably, the affine transformer 410 may be referred to as an affine transformation module, the motion kernel estimator 420 may be referred to as a motion kernel estimation module, and the motion compensator 430 may be referred to as a motion compensation module.

If an affine matrix value ISP, representative of an initial search position, is output by inputting a first frame FR1 for training (hereinafter referred to as a first training frame FR1) and a second frame FR21 for training (hereinafter referred to as a second training frame FR21) to the neural network 111, the affine transformer 410 may perform affine transformation on the second training frame FR21 based on the affine matrix value ISP. In this manner, the second training frame FR21 may be converted into an image similar to the first training frame FR1, so that motion estimation for each block may be performed within a search range.

Then, the motion kernel estimator 420 may divide each of the first training frame FR1 and the second training frame FR22, which is affine transformed, into a plural number N of blocks BL1 and BL2 having a predetermined size, and may perform motion estimation for each block. In the first training frame FR1, each block may be divided into a fixed size of an image, and in the second training frame FR22, each block may be divided into a size that covers the search range to overlap with surrounding blocks. The motion kernel estimator 420 may output motion in kernel form, which may be used for a later differentiable convolution operation during prediction using motion compensation.

FIG. 4B is a diagram illustrating an example of the motion kernel estimator 420 which is made to be differentiable, and FIG. 4C is a diagram illustrating an example of a process performed by an unfolding module 421.

Referring to FIGS. 4B and 4C, each block BL2 of the second training frame FR22, which is affine transformed, may be divided into (2S + *1*)*²* number of patches PA by an unfolding module 421. Here, S denotes a search range. The size of the patch PA is a block size B and is equal to a block size of the first training frame FR1. For example, if the block size B is 4, and the search range S is 3, the block may be divided into 49 patches PA having a size of 4 by the unfolding module 421.

Then, a Sum of Absolute Differences (SAD) between the respective patches PA of the specific block BL2 of the second training frame FR2, which is affine transformed, and the block BL1 of the first training frame FR1, which corresponds to the specific block BL2, may be calculated by a SAD calculation module 422, and a motion kernel (MK) may be generated by selecting a patch position with a smallest SAD by using a softmax function 423.

The motion compensator 430 may perform motion compensation and/or convolution by using the motion kernel MK output by the motion kernel estimator 420, and may generate a predicted image FR3 for the first training frame FR1 by merging the motion-compensated block at its original position. The motion compensator 430 may output the generated predicted image FR3, or a residual image which may be a difference FR1-FR3 between the first training frame FR1 and the predicted image FR3.

The trainer 310 may set various loss functions and may train the neural network 111 so that a residue between the predicted image FR3 and the first training image FR1 may be minimized. For example, the loss functions may include Peak Signal-to-Noise Ratio (PSNR), Mean Squared Error (MSE), Cross-Entropy Loss, Binary Cross-Entropy Loss, Log Likelihood Loss, frequency domain loss, etc., but embodiments are not limited thereto. As described above, the neural network 111 may preferably be trained by unsupervised learning using the predicted image FR3, with no need to obtain accurate ground truth (GT).

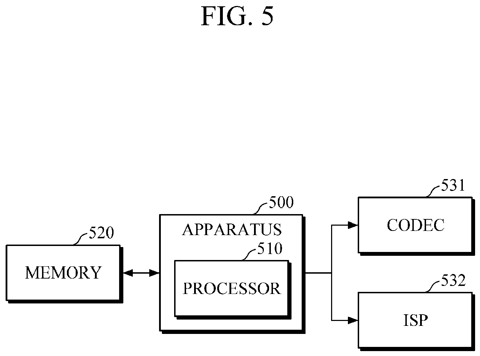

FIG. 5 is a block diagram illustrating an apparatus for optimizing motion estimation of a video according to an embodiment of the present disclosure.

Referring to FIG. 5, an apparatus 500 may be an apparatus for optimizing motion estimation of a video in a video codec device or an image signal processing device, and may include one or more processors 510.

By reading a current frame and a reference frame of a video, captured by a camera and/or an IMU, from a memory 520 before motion estimation of a video is performed by a video codec device 531 or an ISP device 532, the processor 510 may obtain an initial search position for motion estimation by using a neural network. In addition, the processor 510 may provide information about the obtained initial search position to the codec device 531 or the ISP device 532. Preferably, the reference frame may be a frame preceding the current frame.

For example, the neural network may be a CNN. The neural network may be pre-trained by unsupervised learning and a back-propagation method using a trainer which is implemented as a differentiable module which mimics the codec device or the ISP device. The neural network may be pre-trained to output an affine matrix value representative of the initial search position in a search range.

The processor 510 may convert the size of frames, read from the memory 520, to fit the input of the neural network, and then may input the frames to a next neural network, and may convert the affine matrix value, output by the neural network, into a size to fit the size of a target image output by the video codec device 531 or the ISP device 532, and may provide the value to at least one of the video codec device 531 and the ISP device 532.

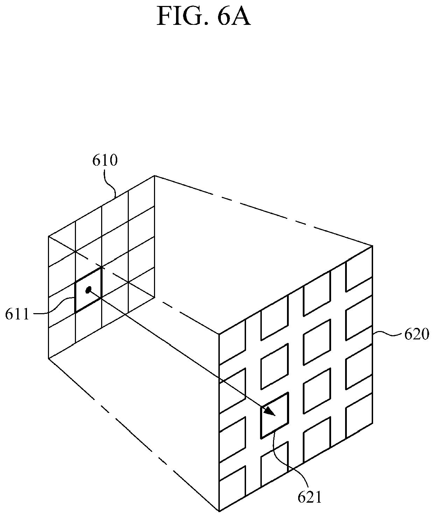

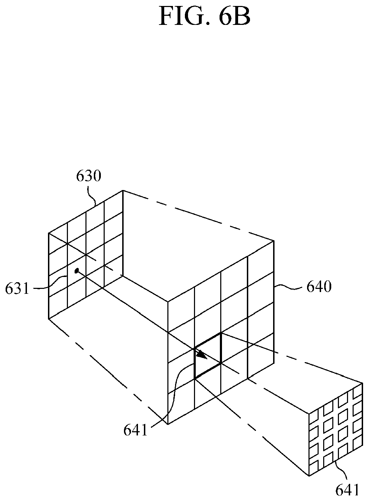

FIGS. 6A and 6B are diagrams explaining an example of usage in standard codec.

FIG. 6A is a diagram illustrating an example of applying affine transformation during inter prediction in High Efficiency Video Coding (HEVC), which may also be referred to as H.265. In FIG. 6A, a coding unit (CU) 611 of a current frame 610 at a time t and a CU 621 of a reference frame 620 at a time t-1 are illustrated, and the frames are divided into 16 blocks 611 and 621. In HEVC, the CU may be referred to as a prediction unit (PU). Processing of the CU 611 of the current frame 610 may include searching for a matching motion in the reference frame 620, in which case by estimating an initial search position using a pre-trained neural network, the center of a search range may be moved based on the initial search position. Generally, affine transformation including rotation of the CU or PU may be impossible in HEVC, such that a more similar geometry may be found by moving a search range. In addition, in the case of roll rotation, it may also be impossible to find a block with a different angle such that an exact matching block cannot be found. However, by finding an area with the smallest SAD within an affine transformed region according to embodiments of the present disclosure, residual components may be reduced compared to the case of a limited search range, thereby improving a compression rate.

FIG. 6B is a diagram illustrating an example of applying affine transformation during inter prediction in Versatile Video Coding (VVC), which may also be referred to as H.266. In VVC, affine transformation of PUs may be supported, and an encoder consumes a relatively large amount of resources. In FIG. 6B, a PU 631 of a current frame 630 is shown on the left, and a PU 641 of a frame 640, to which affine transformation is applied, is shown in the middle. Preferably, unlike a general method of finding motion for each PU, the affine motion may be found after affine bias is applied, such that the accuracy of motion vector relative to the search range may be improved. Then, by performing motion compensation in units of 4x4 subblocks of the PU 641, only affine information may be transmitted to a decoder. As described above, by optimizing motion estimation using a neural network, it is possible to reduce an amount of affine operation of the encoder.

Because ISP may have no set standard such as a standard codec, affine information output from the neural network may be readily used according to the embodiments of the present disclosure. For example, by using the affine information for a video stabilizer, inter-frame motion during video filming may be estimated and compensated in real time based on the above embodiments, such that camera movement may be offset. For noise reduction, there is a method of reducing random image noise (e.g., 3DNR, etc.) by overlapping similar noisy patches, in which motion may be used in the process of estimating patches from surrounding frames. Preferably, the patches may be estimated by specifying a search range as in the motion estimation, and by obtaining the patches by affine transformation according to the above embodiments, a more similar geometry may be used, and noise cancellation performance may be improved. In the High Dynamic Range (HDR) technology, brightness adaptive fusion between two images with different exposures may be performed, in which case affine information according to the above embodiments may be used as camera motion affine information between two images with a time difference. Further, camera movement during the exposure time in a camera motion de-blur algorithm may be replaced with the affine transformation described above, and the de-blur kernel may be estimated and reflected. In addition, the above embodiments may be used for inter-frame motion estimation during frame rate up conversion.

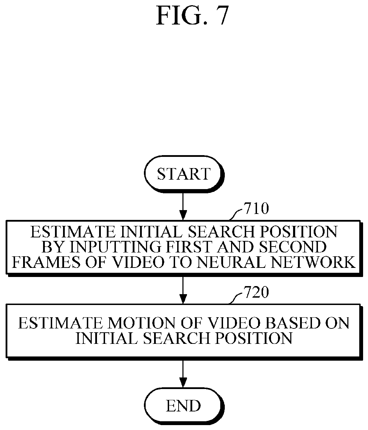

FIG. 7 is a flowchart illustrating a motion estimation method according to an embodiment of the present disclosure.

The method of FIG. 7 is an example of a motion estimation method which may be performed by an image processing apparatus, for example at least one of the image processing apparatuses 100, 200, and 300, and the apparatus 500 described above, and will be briefly described below in order to avoid redundancy.

Referring to FIG. 7, the image processing apparatus may estimate an initial search position by inputting two frames of a video to a neural network at operation 710. Preferably, the neural network may be trained by unsupervised learning using a back-propagation method and a trainer which may be implemented as a differentiable module. The neural network may be trained to output an initial search range in the form of an affine matrix value which may be used for motion estimation in codec encoding and ISP.

The image processing apparatus may estimate motion of a video based on information about the initial search position output by the neural network at operation 720. For example, by estimating the motion after moving the center of the search range to the initial search position, the amount of computation may be minimized.

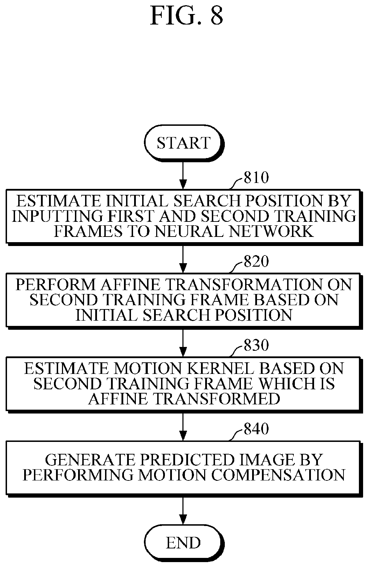

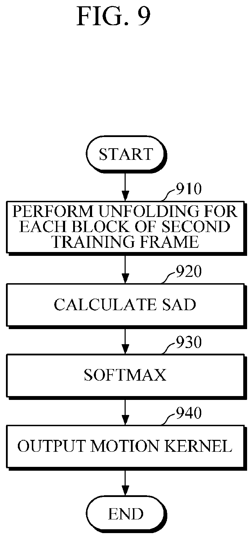

FIG. 8 is a flowchart illustrating a method of training a neural network according to an embodiment of the present disclosure. FIG. 9 is a flowchart illustrating an example of motion kernel estimation of FIG. 8. Preferably, one or more operations shown in FIGS. 8 and 9 may be performed by or using any of the elements described above, for example at least one of the image processing apparatus 300 and the elements included therein.

Referring to FIG. 8, an affine matrix value, representative of an initial search position, may be obtained by inputting first and second training frames to a neural network at operation 810.

Then, based on the affine matrix value output at operation 810, affine transformation may be performed on the second training frame by using an affine transformation module of a trainer at operation 820. The trainer may be implemented by or using a neural network which mimics the standard codec or ISP. The affine transformation model may be implemented as a differentiable module so that backpropagation flows when the neural network is trained. In this manner, the second training frame FR21 may be converted into an image similar to the first training frame FR1, so that motion estimation for each block may be performed within a search range.

Subsequently, based on the second training frame which is affine transformed, motion kernel may be estimated at operation 830.

Referring to FIG. 9, by performing unfolding for each block of the second training frame which is affine transformed, each block may be divided into a plurality of patches at operation 910. Preferably, each block of the second training frame may be divided into a size that covers the search range to overlap with surrounding blocks.

Then, at operation 920, a SAD may be calculated between the respective patches of each block of the second training frame, which is affine transformed, and the block of the first training frame, which corresponds to the each block.

Subsequently, by applying a softmax function at operation 930 to the SAD calculated for each block of the second training frame which is affine transformed, a motion kernel may be output by selecting a patch position with a smallest SAD at operation 940.

Referring again to FIG. 8, motion compensation and/or convolution may be performed by using the motion kernel estimated at operation 830, and a predicted image for the first training frame may be generated at operation 840 by merging the motion-compensated block at its original position. By using the generated predicted image FR3, or a residual image which may be a difference FR1-FR3 between the first training frame FR1 and the predicted image FR3, the neural network 111 may be trained to minimize a pre-defined loss function.

Embodiments be realized as a computer-readable code written on a computer-readable recording medium. The computer-readable recording medium may be any type of recording device in which data is stored in a computer-readable manner.

Examples of the computer-readable recording medium include a ROM, a RAM, a CD-ROM, a magnetic tape, a floppy disc, an optical data storage, and a carrier wave (e.g., data transmission through the Internet). The computer-readable recording medium can be distributed over a plurality of computer systems connected to a network so that a computer-readable code is written thereto and executed therefrom in a decentralized manner. Functional programs, codes, and code segments needed for realizing embodiments can be readily inferred by programmers of ordinary skill in the art to which the disclosure pertains.

The present disclosure has been described herein with regard to preferred embodiments. However, it will be obvious to those skilled in the art that various changes and modifications can be made without changing the scope of the present disclosure. Thus, it is clear that the above-described embodiments are illustrative in all aspects and are not intended to limit the present disclosure.

## Claims

1. An image processing apparatus comprising:
a position estimation module configured to estimate an initial search position by using a first frame and a second frame of a video as input to a neural network that is trained to output the initial search position; and
a motion estimation module configured to perform motion estimation based on the initial search position.

2. The image processing apparatus according to claim 1, wherein the neural network is trained to output the initial search position as an affine matrix value.

3. The image processing apparatus according to any of the previous claims, wherein the neural network comprises a convolutional neural network (CNN).

4. The image processing apparatus according to any of the previous claims, wherein the first frame and the second frame have an original size, and
wherein the image processing apparatus further comprises a first size conversion module configured to convert the first frame into a converted first frame having an input size associated with the neural network, and to convert the second frame into a converted second frame having the input size.

5. The image processing apparatus according to any of the previous claims, wherein the motion estimation module is further configured to perform the motion estimation by moving a search range toward the initial search position.

6. The image processing apparatus according to any of the previous claims, further comprising a second size converter configured to convert a value of the initial search position, output by the position estimator, into a converted value having a target image size associated with the motion estimation module; and/or
further comprising at least one of a video codec device and an image signal processing (ISP) device.

7. The image processing apparatus according to any of the previous claims, further comprising a training module which is differentiable and is configured to train the neural network using a back-propagation method.

8. The image processing apparatus according to the previous claim, wherein the training module is further configured to train the neural network using unsupervised learning; and/or
to train the neural network so that a loss function between a first training frame and a predicted image is minimized, wherein the predicted image is predicted from a second training frame using the neural network.

9. The image processing apparatus according to the previous claim, wherein the training module comprises:
an affine transformation module configured to receive a first training frame and a second training frame as input, and to perform affine transformation on the second training frame based on the affine matrix value;
a motion kernel estimation module configured to perform the motion estimation on the affine-transformed second training frame, and to output a motion kernel; and
a motion compensation module configured to perform motion compensation based on a result of the motion estimation and to output the predicted image.

10. The image processing apparatus according to the previous claim, wherein the motion kernel estimation module is further configured to:
perform unfolding for each block of the affine-transformed second training frame;
divide the each block into a plurality of patches;
calculate a Sum of Absolute Differences (SAD) between the plurality of patches of the each block and corresponding blocks of the first training frame; and
generate the motion kernel based on the calculated SAD using a softmax function.

11. A motion estimation method for motion estimation of a video by an image processing apparatus comprising:
estimating an initial search position by providing a first frame and a second frame of the video as input to a neural network that is trained to output the initial search position; and
performing the motion estimation based on the initial search position.

12. The motion estimation method according to the previous claim, wherein the neural network is trained to output the initial search position as an affine matrix value; and/or
wherein the first frame and the second frame have an original size, and
wherein the method further comprises converting the first frame into a converted first frame having an input size associated with the neural network, and converting the second frame into a converted second frame having the input size; and/or
wherein the performing of the motion estimation comprises moving a search range toward the initial search position.

13. The motion estimation method according to any of the claims 11-12, further comprising converting a value of the initial search position into a converted value having a target image size associated with the motion estimation; and/or
further comprising training the neural network using a training module, which is differentiable, and a back-propagation method.

14. The motion estimation method according to the previous claim, wherein the training of the neural network is performed using unsupervised learning.

15. An apparatus for optimizing motion estimation of a video in a video codec device or an image signal processing (ISP) device comprising:
one or more processors configured to:
read a current frame and a reference frame of the video from a memory before the motion estimation of the video is performed by the video codec device or the ISP device,
obtain an initial search position for the motion estimation using a neural network, and
provide the initial search position to the video codec device or the ISP device,
wherein the neural network is trained to receive the current frame and the reference frame as input and to output an affine matrix value which represents the initial search position.
